# EUROPEAN PATENT APPLICATION

(11) **EP 1 818 321 A2**
(43) Date of publication of application: **15.08.2007**
(21) Application number: 06025576.7
(22) Date of filing: 11.12.2006
(51) Int. Cl.: C04B 41/86, C04B 35/80

(54) **Inorganic fiber article**

(30) Priority: 13.02.2006 JP 2006035798
(71) Applicant: IBIDEN CO., LTD., Ogaki-shi Gifu 503-8604 (JP)
(72) Inventor: Ito, Yasutaka Ibiden Co., Ltd., Ibi-gun Gifu 501-0695 (JP); Sato, Tsutomu Ibiden Co., Ltd., Ogaki-shi Gifu 503-8559 (JP)
(74) Representative: HOFFMANN EITLE

(57) **Abstract**

It is an object of the present invention to provide an inorganic fiber article that has low particle generating properties, high heat insulation properties and an improved durability. The inorganic fiber article according to the present invention is an inorganic fiber article comprising an inorganic coating layer having foams, the inorganic coating layer formed on at least a portion of the surface of an inorganic fiber molded body

## Description

### TECHNICAL FIELD

The present invention relates to an inorganic fiber article.

### BACKGROUND ART

Solar batteries are manufactured by forming transistors and the like on a Si substrate as a starting material. Therefore, a heating treatment is normally applied to the Si substrate several times. Moreover, a conveyer for conveying the Si substrate is provided inside the furnace for heating treatment, and a heat insulating material is also provided such that it surrounds the conveyer in order to reduce heat energy loss.

Here, with respect to the heat insulating material, for example, there has been used a plate shaped body manufactured through the following processes: first, a slurry is produced by mixing and dispersing a ceramic fiber, an inorganic binder, a fiber coagulant, and fiber flocculants, and using this slurry, a wet-type sheet forming process is carried out to form an aggregate; next, the aggregate is pressed and compressed in the thickness direction to manufacture the plate shaped body.

In the method for manufacturing the solar battery, wiring and the like are directly produced on the Si substrate; therefore, the cleanness of the surface of the Si substrate is under extremely strict requirements. Moreover, several kinds of heating treatments are necessarily carried out on the Si substrate. The several heating treatments on the Si substrate employs a furnace and as a matter of course, extremely strict conditions are also imposed on the particle generation from the heat insulating material that constitutes the inner wall and the tray of the furnace.
This is because, if the particle scattering from the heat insulating material that constitutes the inner wall and the tray of the furnace adheres to the surface of the Si substrate during the several heating treatments, this becomes a serious cause of generating defective circuits. Such particle generation from the heat insulating material have been one of the causes for producing defective products in processes such as a process for forming a semiconductor circuit on substrates such as a glass substrate and a ceramic substrate, a process for manufacturing a display substrate, and manufacturing processes carried out in a chip-manufacturing equipment.

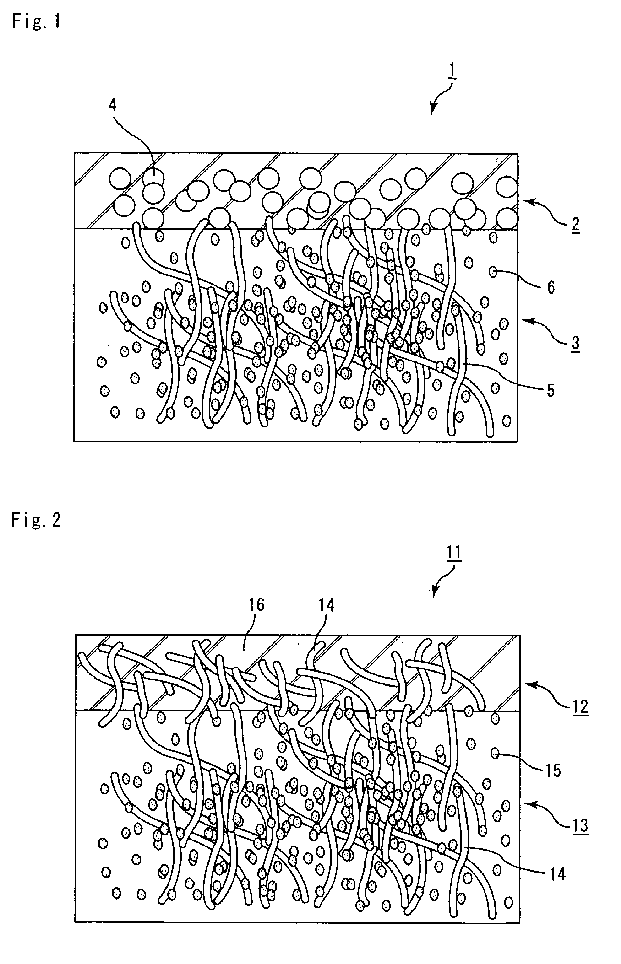

Thus, in order to lower the particle generation from the heat insulating material, Patent Document 1 discloses, for example, a heat resistant material 11 formed of a base member 13 which is made in contact with a glass layer 12 as shown in Fig. 2, the base member 13 mainly composed of an inorganic fiber based material 14 and containing an inorganic particle 15, the glass layer 12 obtained through carrying out heating treatment on a glass material-containing base member mainly composed of glass material. The base member further contains as a binder a glass 16 obtained through carrying out heating treatment on the above-mentioned glass material, and the glass layer 12 contains the inorganic fiber based material 14 as a reinforcing material.
Patent Document 1: JP Patent No. 3606744

### DISCLOSURE OF THE INVENTION PROBLEMS TO BE SOLVED BY THE INVENTION

The heat resistant material disclosed in Patent Document 1 has a glass layer formed on the base member; therefore, compared with other heat insulating materials in which the entire exposed surface is constituted by inorganic fibers, the above-mentioned heat resistant material exerts effects to a certain extent, with respect to lowering the particle generating properties.
However, in the heat resistant material disclosed in Patent Document 1, the inorganic fiber based material 14 contained in the glass layer 12 as a reinforcing material is likely to be exposed to the surface of the glass layer 12, and in this case, the inorganic fiber based material contained as a reinforcing material is the subject material causing particle generation.
Moreover, fine cracks are likely to be generated in the glass layer 12 due to sudden heating, and use of the heat resistant material for a long period of time. Once the fine cracks are generated, they can not be prevented from extending further and thus develop into larger cracks; therefore, the above-mentioned heat resistant material requires an improved durability.

### MEANS FOR SOLVING THE PROBLEMS

In light of the above-mentioned problem, the inventors of the present invention have made earnest studies and as a result, found that, when an inorganic coating layer having foams is formed on at least a portion of the surface of an inorganic fiber molded body, it becomes possible to obtain an inorganic fiber article that has low particle generating properties, high heat insulation properties and an improved durability and that can be used for various purposes. The present inventors thereby carried out examinations from various aspects and completed the present invention.

In other words, an inorganic fiber article of the present invention comprises an inorganic coating layer having foams, the inorganic coating layer formed on at least a portion of the surface of an inorganic fiber molded body.

The inorganic coating layer is desirably formed on the entire surface of one of the faces constituting the outer shape of the inorganic fiber molded body.

It is desirable that the inorganic coating layer mainly comprises an amorphous material.

It is desirable that the amorphous material is at least one amorphous material selected from the group consisting of glass, a diamond like carbon, a silicone oxide film, a hafnium oxide film, a chalcogenide based multi-element alloy, and an opaline material.

The inorganic coating layer desirably contains at least one crystalline material selected from the group consisting of carbide crystals, nitride crystals, oxide crystals, and carbon crystals.

It is desirable that at least a portion of the foams are closed pores.

A water permeability from the outwardly-exposed surface side to the inorganic fiber molded body side of the inorganic coating layer is desirably 1% or less.

The diameter of each of the foams is desirably 90% or less with respect to the thickness of the inorganic coating layer.

The inorganic coating layer desirably contains 30% by weight or more of silica, and has a coefficient of thermal expansion of 6 ppm or less.

### EFFECTS OF THE INVENTION

With respect to the inorganic fiber article of the present invention, an inorganic coating layer having foams is formed with good adhesion to at least a portion of the surface of an inorganic fiber molded body. Thus, particle generation from the inorganic fiber molded body is effectively suppressed, and thereby the inorganic fiber article can be advantageously used even under environments in which particle generation is considered unfavorable. Further, safeness on the living body can be enhanced.

Further, the inorganic fiber article of the present invention comprises an inorganic coating layer having foams and the inorganic coating layer itself has a high heat insulation property; therefore, the heat insulation property of the inorganic fiber article together with the heat insulation property of the inorganic fiber molded body can be synergistically improved so that the inorganic fiber article can be applied to various purposes such as heat insulating materials.

In the inorganic fiber article of the present invention, an inorganic coating layer is formed on the surface of the inorganic fiber molded body; thus, the strength thereof is greater than that of a article constituted only by the inorganic fiber molded body. Therefore, cracks and the like can be prevented from generating, thereby preventing damages and the like to the inorganic fiber article itself. In addition, even if cracks and the like are generated in the inorganic coating layer, the dividing structure by the foams slows down the development of the generated cracks and the like so that cracks and the like are prevented from generating in the entire inorganic coating layer. Thus, the durability of the inorganic fiber article can be improved and particle generation can be suppressed effectively.

### BEST MODE FOR CARRYING OUT THE INVENTION

Hereinafter, the inorganic fiber article of the present invention will be described referring to the drawings.
The inorganic fiber article of the present invention comprises an inorganic coating layer having foams, the inorganic coating layer formed on at least a portion of the surface of an inorganic fiber molded body.

Fig. 1 is a cross-sectional view that schematically shows a portion of a cross-section obtained by cutting an inorganic fiber article of the present invention in the perpendicular direction to the exposed surface.
As shown in Fig. 1, an inorganic fiber article 1 comprises an inorganic fiber molded body 3 and an inorganic coating layer 2 which is formed on a portion of the surface of the inorganic fiber molded body 3.

The inorganic fiber molded body 3 includes at least an inorganic fiber 5 and if necessary, an inorganic powder 6 (described later) is also added thereto. It can be observed that, in the fine structure of the inorganic fiber molded body 3, inorganic fibers 5 are entangled with one another so that they can support each other, and those inorganic fibers 5 are allowed to maintain a certain shape. Moreover, if an inorganic binder is also present, the points or surfaces at which the entangled inorganic fibers 5 contact with each other are bonded to one another so that the inorganic fibers 5 can firmly support each other, thereby enhancing further the mechanical characteristics. Further, if the inorganic powder 6 is added to the inorganic fiber molded body 3, the inorganic powder 6 is resultantly included in the inorganic fibers 5 having an entangled structure and thus radiation heat transfer and convection heat transfer can be suppressed to improve insulating properties.

On the other hand, the inorganic coating layer 2 forms a film which is excellent in adhesive properties to the inorganic fiber molded body 3 and further has a large number of foams 4 inside the layer. With the arrangement in which the inorganic coating layer 2 and the inorganic fibers 5 which exist within a predetermined thickness at the outermost surface of the inorganic fiber molded body 3 are made to stick firmly to each other or are fused to one another, the inorganic coating layer 2 is allowed to stick firmly to the outermost surface of the inorganic fiber molded body 3.

At the interface between the inorganic coating layer 2 and the inorganic fiber molded body 3, the inorganic fiber 5 constituting the inorganic fiber molded body 3 does not substantially exist inside the inorganic coating layer 2; even if the inorganic fiber 5 does exist inside the inorganic coating layer 2 and forms an inorganic fiber ingressing layer, the proportion of the inorganic fiber ingressing layer to the thickness of the inorganic coating layer 2 is extremely small. Generally, the ingressing layer has a thickness of 100 µm or less. Consequently, the proportion of the inorganic fiber 5 constituting the inorganic molded body 3 existing in the inorganic coating layer 2 is extremely small even though the adhesive properties between the inorganic fiber molded body 3 and the inorganic coating layer 2 are maintained; thus, particle generation from the inorganic fiber existing in the glass layers of conventional inorganic fiber articles can be effectively prevented from occurring.
The proportion of the thickness of the inorganic fiber ingressing layer with respect to the inorganic coating layer 2 is normally 20% or less.

Although the inorganic coating layer 2 may be formed on at least a portion of the surface of the inorganic fiber molded body, desirably, the inorganic coating layer 2 is formed on the entire surface of one of the faces constituting the outer shape of the inorganic fiber molded body 3. With the entire surface of one of the faces constituting the outer shape of the inorganic fiber article 1 being covered with the inorganic coating layer 2, it becomes possible to cover the entire surface of a object to be insulated such as furnaces by combining a plurality of inorganic fiber articles of the present invention, even if one inorganic fiber article can not cover the surface of the object to be insulated. Further, with all the faces constituting the outer shape of the inorganic fiber article 1 being covered by the inorganic coating layer 2, it becomes possible to realize a higher particle generation preventing performance. By thus changing the configuration of the inorganic coating layer 2 according to the required insulating ability and particle generation preventing performance, the inorganic fiber article 1 of the present invention can respond to various requirements, and in addition the production efficiency can be improved, thereby realizing cost reduction.

With respect to the thickness of the inorganic coating layer 2, although not particularly limited, the upper limit value of the thickness is desirably 5 mm, more desirably 3 mm, while the lower limit value of the thickness is desirably 0.4 mm, and more desirably 0.7 mm.
The thickness of the inorganic coating layer 2 of less than 0.4 mm tends to lower the heat insulation properties and have difficulty in maintaining strength, thereby easily causing cracks and the like. On the other hand, in order to set the thickness of the inorganic coating layer 2 to exceed 5 mm, the forming procedures of the layer tend to be extremely complex, and technical difficulties may also be involved.

The inorganic coating layer 2 has foams 4, and desirably, at least a portion of these foams are closed pores.
With at least a portion of the foams being closed pores, air convection in the inorganic coating layer 2 can be prevented to improve the heat insulation properties. Further, when the foams are open pores, particle generated from particle generation from the inorganic fiber molded body 3 may be discharged through the open pores to the outside of the inorganic coating layer 2. In contrast, when the foams are closed pores, the inorganic fiber does not pass through the inorganic coating layer and thus particle generation can be prevented effectively. In this inorganic coating layer 2 almost all the foams 4 are desirably closed pores.

The diameter of each of the foams is desirably 90% or less with respect to the thickness of the inorganic coating layer, more desirably 50% or less.
The diameter of the foam exceeding 90% with respect to the thickness of the inorganic coating layer lowers the strength of the inorganic coating layer because voids increase in the inorganic coating layer. The diameter of the foam exceeding 90% also tends to easily generate open pores and further leads to deterioration of heat insulation property by air convection.

More specifically, the diameter of the foam is desirably in the range of 10 to 1600 µm.
The diameter of the foam within the above-mentioned range effectively prevents cracks and the like from developing in the inorganic coating layer, and further improves the heat insulation property.
The diameter of the foam is, however, set to such a range within the above-mentioned range that it satisfies the condition in which the diameter of the foam is 90% or less with respect to the thickness of the inorganic coating layer.

The ratio of the area within which the foams occupy the inorganic coating layer is not particularly limited but desirably set to 40 to 90% by volume.
The ratio of less than 40% by volume tends to increase the rate of solid heat transfer leading to deterioration of the heat insulation property, whereas the ratio exceeding 90% by volume reduces strength and also increases the existing rate of open pores which may cause difficulty in effectively preventing particle generation.

It is desirable that the inorganic coating layer mainly comprises an amorphous material.
Since amorphous materials have amorphous properties, it is difficult for heat to be transferred as compared with crystallinematerials; thus, excellent heat insulation property can be obtained. In addition, amorphous materials can realize excellent processability, and mechanical characteristics become isotropic to avoid problems such as cracks developing in the characteristic direction. Moreover, the inorganic coating layer made of amorphous materials can be easily formed at a comparatively low temperature. Based on the above-mentioned reasons, the inorganic coating layer mainly comprising the amorphous material has excellent adhesive property with respect to the inorganic fiber molded body, and also has a superior heat resistance.

It is desirable that the amorphous material constituting the inorganic coating layer 2 is at least one amorphous material selected from the group consisting of glass, a diamond like carbon, a silicone oxide film, a hafnium oxide film, a chalcogenide based multi-element alloy, and an opaline material.
This is because the amorphous materials described above are excellent in heat insulation property and processability, and can easily be combined with other functional materials.
Within the above-mentioned amorphous materials, glass is desirably used from the viewpoint of its heat resistance, processability, and availability.
The following description will describe a case in which the inorganic coating layer 2 comprises glass as the amorphous material.

With respect to the glass contained in the inorganic coating layer 2, although not particularly limited, examples thereof include silica glass, aluminosilicate glass, borosilicate glass, soda lime glass, potash soda glass, and leaded potash glass.
These glasses may be used alone, or may be used in combination.

The materials mainly constituting the glass is for example, silica, alumina, boric acid and the like. In the inorganic coating layer, these materials in a melted state form a layer structure having amorphous properties. Further, alkali metal compound such as sodium oxide, potassium oxide, and lithium oxide, and alkaline earth metal compound such as calcium oxide, magnesium oxide, and barium oxide may be supplementarily added to the inorganic coating layer, if necessary.

The inorganic coating layer desirably contains 30% by weight or more of silica, and has a coefficient of thermal expansion of 6 ppm or less.
When the inorganic coating layer contains 30% by weight or more of silica, it becomes possible to form the inorganic coating layer efficiently, and also the heat insulation property can be improved. Moreover, the coefficient of thermal expansion of 6 ppm or less makes it difficult to cause a large thermal stress despite the change in temperature, thereby effectively preventing cracks and the like from generating even upon use of the inorganic fiber article in a severe condition at a high temperature of 600□C or more.

Upon considering the conditions with respect to the content of silica, an exemplary content of the respective main constituent materials of the above-mentioned glass includes 30 to 70% by weight of silica, 5 to 30% by weight of alumina, and 5 to 25% by weight of boric acid. Further, alkali metal, alkaline earth metal, and other unavoidable impurities and the like are also contained in the glass as residual materials other than the main constituent materials. The respective constituent materials being included within the above-mentioned range allows to form an inorganic coating layer superior in durability, heat resistance, heat insulation property, mechanical strength and the like, on the surface of the inorganic fiber molded body.

The inorganic coating layer desirably contains at least one crystalline material selected from the group consisting of carbide crystals, nitride crystals, oxide crystals, and carbon crystals.
When heated at a high temperature (for example, at 1000 □C) the crystalline material reacts with the oxygen in the inorganic coating layer mainly composed of glass and the like, and generates gases such as carbon dioxide. In other words, at a melting temperature of the amorphous material upon forming the inorganic coating layer, the above-mentioned crystalline material easily generates gases so that it is allowed to function as a foaming agent for forming foams. As described above, there exist foams formed by the foaming function of the crystalline material in the inorganic coating layer such that the inorganic coating layer is allowed to have a dividing structure divided by closed pores.
This dividing structure allows slowing down the development of cracks and the like, even if cracks are generated, and effectively prevents the cracks and the like from extending over the entire inorganic coating layer.

With respect to the above-mentioned carbide crystals, examples thereof include carbide crystals such as silicon carbide, titanium carbide, iron carbide, vanadium carbide, chromium carbide, and molybdenum carbide.
With respect to the nitride crystals, examples thereof include nitride crystals such as silicon nitride, aluminum nitride, boron nitride, copper nitride, iron nitride, gallium nitride,molybdenum nitride,tungsten nitride,lithium nitride, and magnesium nitride.
With respect to the oxide crystals, examples thereof include oxides such as PbO, BaCO₃, and CaCO₃.
With respect to the carbon crystals, examples thereof include graphite and the like.
The inorganic coating layer including such crystalline materials enables foams to be formed effectively.

While the above-mentioned crystalline materials are allowed to effectively function as a foaming agent for forming foams in the inorganic coating layer, a portion of the materials remain in the inorganic coating layer. These remainder materials function as a filler and improve the strength of the inorganic coating layer. With respect to this point as well, the crystalline material as described above is desirably used. The above-mentioned crystalline material also functions effectively with respect to the function of preventing cracks and the like from extending through the inorganic coating layer.
Here, the crystalline material does not necessarily remain in the inorganic coating layer.

The content of crystalline materials in the inorganic coating layer is not particularly limited; however, when the inorganic coating layer mainly comprises the amorphous material, the content of crystalline material is desirably 10 to 30 parts by weight with respect to 100 parts by weight of amorphous material.
The content of the crystalline materials of less than 10 parts by weight is likely to make the amount of foams formed in the inorganic coating layer become small, to reduce the heat resistance property and crack resistance property. In contrast, the content of the crystalline materials exceeding 30 parts by weight increases the amount of formed foams to reduce the strength and heat resistance property, and further may have difficulty in effectively preventing particle generation since the existing rate of open pores becomes high.

Here, the upper limit value of the average particle diameter of the crystalline materials contained in the inorganic coating layer is desirably 100 µm, more desirably 30 µm, while the lower limit value thereof is desirably 5 µm, and more desirably 10 µm.
The average particle diameter of the crystalline material is correlative with the diameter of the foam as well as the weight of the crystalline materials. That is, the average particle diameter and the amount of the crystalline materials to be added as the foaming agent is determined according to the required diameter of the foam. The average particle diameter of the crystalline materials exceeding 100 µm tends to form foams having a diameter that is too large, whereas the average particle diameter of less than 5 µm tends to cause easily aggregate of the crystalline materials thereby forming foams that become too large due to the aggregate. Therefore, the handling of the powder becomes difficult.

Among the crystalline materials described above, particularly, carbide crystals and carbon crystals are desirably used.
These materials efficiently generate carbon dioxide through reactions with oxygen at a high temperature, and thus may be effectively used upon forming foams in the inorganic coating layer.

Further, silicon carbide is more desirably used among the carbide crystals.
This is because silicon carbide is rich in reactivity with oxygen at a high temperature so that it is allowed to easily generate carbon dioxide, thereby efficiently forming foams, as a foaming agent.
Further, since silicon carbide is a conductive material, the inorganic coating layer containing the silicon carbide can lower the volume resistance of the inorganic coating layer at a high temperature by one digit. Therefore, the inorganic coating layer containing silicon carbide can effectively prevent dust and particles in the atmosphere by an electrostatic effect from adhering, to maintain the use environment in a clean condition.

A water permeability from the outwardly-exposed surface side to the inorganic fiber molded body side of the inorganic coating layer is desirably 1% or less.
The water permeability exceeding 1% tends to make the existing rate of the open pores in the inorganic coating layer become high, and cause difficulty in effectively preventing particle generation in the inorganic fiber article; however, the inorganic fiber article of the present invention can keep the ratio of open pores to a low rate, thereby preventing the particle generation.

Next, the inorganic fiber molded body 3 will be described.
Examples of the inorganic fiber 5 constituting the inorganic fiber molded body 3 include silica-alumina fiber, alumina fiber, silica fiber, zirconia fiber, glass fiber, potassium titanate whisker fiber, and rock wool, as well as inorganic fibers that contain the aforementioned inorganic fibers in addition to at least one compound selected from the group consisting of an alkali metal compound, an alkaline earth compound and a boron compound. The use of these inorganic fibers is desirable in view of heat resistance, strength and availability. The above-mentioned inorganic fibers may be used alone or two or more kinds thereof may be used in combination.
Among the above-mentioned inorganic fibers, particularly silica-alumina fiber is desirably used from the viewpoint of heat resistance and handling characteristics.
The content of alkaline metal compound and the like in the above-mentioned inorganic fibers containing alkali metal compound is desirably 15 to 40% by weight. Such inorganic fibers show appropriate solubility to saline solution so that even when they are released to the atmosphere they are safe to the environment and ecosystem.

The cross-sectional shape of the inorganic fiber is not particularly limited and examples thereof include a circular cross-section, flat cross-section, hollow cross-section, polygonal cross-section and sheath-core cross-section. Because deformed cross-section fiber having a hollow cross-section, flat cross-section or polygonal cross-section among these sections is increased in opportunities to reflect radiation heat transfer in heat transfer and also slightly improved in heat insulation property, it can be preferably used.

The lower limit value of the average fiber length of the inorganic fiber is desirably 0.1 mm and more desirably 0.5 mm. On the other hand, the upper limit value of the average fiber length of the inorganic fiber is desirably 50 mm and more desirably 10 mm.
When the average fiber length of the inorganic fiber is less than 0.1 mm, entanglements among inorganic fibers are scarcely caused and there is therefore the case where the mechanical strength of the obtained inorganic fiber molded body decreases. On the other hand, when the average fiber length is longer than 50 mm, though a reinforcing effect is obtained, inorganic fibers are not tightly entangled with each other and only single inorganic fibers are intertwined into a ball, whereby continuous voids are easily generated, leading to a fear that a reduction in heat insulation property is brought about.

The lower limit value of the average fiber diameter of the inorganic fiber is desirably 1 µm and more desirably 2 µm. On the other hand, the upper limit value of the average fiber diameter of the inorganic fiber is desirably 10 µm and more desirably 5 µm.
This is because when the average fiber diameter of the inorganic fiber is less than 1 µm, the mechanical strength of the inorganic fiber itself decreases, whereas when the average fiber diameter is more than 10 µm, solid heat transfer through the inorganic fiber as a medium is increased, and there is therefore the case where the heat insulation property is deteriorated.

The inorganic fiber molded body 3 desirably further contains the inorganic powder 6.
The inorganic fiber molded body constituting the inorganic fiber article of the present invention should contain at least an inorganic fiber. The use of such inorganic fiber molded body allows the inorganic fiber article of the present invention to exert its effect as an inorganic fiber article; however, it is desirable that the inorganic fiber molded body further contains the inorganic powder 6.
If the inorganic fiber molded body further contains the inorganic powder, radiation heat transfer is suppressed efficiently. Also, the continuous voids in the structure that are caused by entanglement of the inorganic fibers can be divided and it is therefore possible to also reduce convection heat transfer in the inorganic fiber molded body effectively.

Examples of the inorganic powder include a TiO₂ powder, BaTiO₃ powder, PbS powder, SiO₂ powder, ZrO₂ powder, SiC powder, NaF powder and LiF powder. These inorganic powders may be used alone or two or more kinds thereof may be used in combination.
When the inorganic powders are used in combination, preferable examples of the combinations include a combination of a TiO₂ powder and SiO₂ powder, a combination of a TiO₂ powder and BaTiO₃ powder, a combination of a SiO₂ powder and BaTiO₃ powder, and a combination of a TiO₂ powder, SiO₂ powder and BaTiO₃ powder.

As to the compounding amount of the inorganic fiber, the upper limit value thereof is desirably 50% by weight and more desirably 40% by weight based on the total weight of the materials constituting the inorganic fibermoldedbody. On the other hand, the lower limit value of the compounding amount of the inorganic fiber is desirably 5% by weight and more desirably 10% by weight.
When the compounding amount of the inorganic fiber is less than 5% by weight, the reinforcing effect produced by the inorganic fiber is not obtained and therefore, the handling characteristics and mechanical strength of the inorganic fiber molded body or inorganic fiber article are deteriorated. When the compounding amount of the inorganic fiber to be compounded exceeds 50% by weight on the other hand, many continuous voids are resultantly present in the structure in which the inorganic fibers constituting the inorganic fiber molded body are entangled, leading to an increase in convection heat transfer, molecular heat transfer and radiation heat transfer, with the result that heat insulation property is deteriorated.

As to the compounding amount of the inorganic powder, the upper limit thereof is desirably 95% by weight and more desirably 90% by weight based on the total weight of the materials constituting the inorganic fibermoldedbody. On the other hand, the lower limit of the compounding amount of the inorganic powder is desirably 50% by weight and more desirably 60% by weight.
When the compounding amount of the inorganic powder falls in the above-mentioned range, radiation heat transfer can be reduced while retaining the reinforcing effect of the inorganic fiber. Also, the effect of decreasing convection heat transfer which is obtained by dividing continuous voids in a confounded structure of the inorganic fiber can be obtained.

The lower limit value of the average particle diameter of the inorganic powder is desirably 0.5 µm and more desirably 1 µm. On the other hand, the upper limit value of the average particle diameter of the inorganic powder is desirably 20 µm and more desirably 10 µm.
When the average particle diameter of the inorganic powder is less than 0.5 µm, not only is it difficult to manufacture the inorganic fiber molded body but also the thermal conductivity of the inorganic fiber molded body is increased (in other words, the heat insulation property is decreased) because radiation heat is insufficiently distributed. When an inorganic powder having an average particle diameter of more than 20 µm is used on the other hand, voids produced in the inorganic fiber molded body become extremely large, leading to an increase in convection heat transfer and molecular heat transfer, resulting in increased thermal conductivity also in this case.
The shape of the inorganic powder is not particularly limited as long as the average particle diameter is within the above-mentioned range. Examples of the shape include desired shapes such as a spherical shape, ellipsoidal shape, polygonal shape, shapes having irregularities or projections formed on the surface thereof and deformed shapes.

Also, the inorganic powder desirably has a ratio of refractive index (specific refractive index) of 1.25 or more for light having a wavelength of 1 µm or more.
The inorganic powder plays a very important role as a radiation heat diffusing material. As the refractive index increases, radiation heat can be diffused more efficiently. As to the specific refractive index, it is very important to limit the conduction of phonons. The larger this value is, the better the effect of limiting phonon conduction is. Therefore, in the present invention, the value of the specific refractive index of the inorganic powder is desirably 1.25 or more.

Here, to add a little more explanation concerning the limitation to phonon conduction, materials having lattice defects in a crystal or materials having a complicated structure are generally known as the material that can limit phonon conduction. The aforementioned TiO₂, SiO₂ and BaTiO₃ tend to have lattice defects and have a complicated structure and it is therefore considered that they are effective to diffuse not only radiation heat but also phonons.

Moreover, an inorganic powder having a reflectance of 70% or more for light having a wavelength of 10 µm or more may be preferably used as the inorganic powder. The light having a wavelength of 10 µm or more is light in the so-called infrared to far-infrared wavelength range. Radiation heat transfer can be reduced more efficiently if the reflectance for light in the above wavelength range is 70% or more.

The solid heat conductivity of the inorganic powder is desirably 20.9 W/mK or less at room temperature.
If an inorganic powder having a solid heat conductivity of more than 20.9 W/mK or more at ambient temperature is used as the raw material, solid heat transfer becomes predominant in the inorganic fiber molded body and therefore the thermal conductivity is increased (there is a reduction in heat insulation property).

Here, the inorganic fiber in this specification refers to an inorganic fiber having an aspect ratio of 3 or more. On the other hand, the inorganic powder refers to an inorganic powder having an aspect ratio of less than 3. In this case, the aspect ratio is the ratio (b/a) of the major diameter (b) tominordiameter (a) of a material.

Also, the inorganic fiber molded body may contain an inorganic binder with the intention of maintaining strength at high temperatures. Examples of the inorganic binder include colloidal silica, synthetic mica and montmorillonite. The above-mentioned inorganic binders may be used alone or two or more kinds thereof may be used in combination.
This inorganic binder may be used, according to the need, in an amount ranging from 1 to 10% by weight based on the total weight of the constituentmaterials of the inorganic fiber molded body: however, a lesser amount of the inorganic binder is more preferably used.
As a mode of use of the above-mentioned inorganic binder, the binder may be used by blending it in raw materials or by impregnating the obtained inorganic fiber article therewith.

The inorganic fiber molded body constituting the inorganic fiber article of the present invention is a molded body obtained by molding inorganic fiber and the like into a desired shape by a dry molding method or a wet molding method. A method for manufacturing the inorganic fiber molded body will be described later.
The shape of the inorganic fiber molded body is not particularly limited, and examples thereof include arbitrary shape such as a plate shape, a disk shape, a cube shape, a rectangular parallelepiped shape, a cylindrical shape, a doughnut type shape and a spherical shape.

The thickness of the inorganic fiber molded body is not particularly limited, and when the inorganic fiber molded body has a plate shape, the thickness thereof is desirably in the range of 2 to 200 mm.
When the thickness of the inorganic fiber molded body is less than 2 mm, it is impossible to impart sufficient heat insulation property and mechanical strength to the inorganic fiber article, whereas when the thickness exceeds 200 mm, molding of the inorganic fiber molded body itself tends to become difficult.

Although not particularly limited, the bulk density of the inorganic fiber molded body is desirably in the range of 0.20 to 0.50 g/cm³ The bulk density may be found as a value obtained by dividing the weight by the apparent volume (see JIS A0202).
When the bulk density is less than 0.20 g/cm³, convection heat transfer and molecular heat transfer are increased, whereas when the bulk density exceeds 0.50 g/cm³, solid heat transfer is increased and the thermal conductivity is therefore increased.
Therefore, in any of these cases, the heat insulation property is deteriorated resultantly.

The inorganic fiber article 1 comprising such an inorganic fiber molded body 3 and the inorganic coating layer 2 formed on at least a portion of the surface of the inorganic fiber molded body desirably has a thermal conductivity of 0.25 W/mK or less at a temperature of 800□C.
The thermal conductivity of 0.25 W/mK or less can improve the durability of the furnace so that the cost and time required for maintenance of the furnace can be cut off.

The inorganic fiber article 1 is desirably resistant to heat at a temperature of 600□C or more, and more desirably resistant to 900□C or more.
The heat resistance to less than 600□C limits the object of use of the inorganic fiber article, whereby the limitation is not preferable with respect to the utility of the inorganic fiber article.

When the inorganic fiber article has a plate shape, the exemplary thickness of the inorganic fiber article is in the range of 10 to 200 mm.
The inorganic fiber article having a thickness of less than 10 mm tends to degrade the heat insulation property and strength to easily cause damages such as cracks, whereas the thickness exceeding 200 mm tends to cause difficulty in manufacturing the inorganic fiber article itself due to its moldability and technical difficulties.

Next, the following description will discuss the method for manufacturing the inorganic fiber article of the present invention.
The inorganic fiber article of the present invention comprises an inorganic fiber molded body and an inorganic coating layer formed on at least a portion of the surface of the inorganic fiber molded body; therefore, the inorganic fiber molded body is manufactured at first and then the inorganic coating layer is formed on the surface thereof.

### (a) In case of using an inorganic fiber molded body obtained by a dry molding method

First, in a dry molding method, the inorganic fiber and, according to the need, the inorganic powder and the inorganic binder are charged at a predetermined ratio into a mixer such as a V-type mixer. These components are mixed well and charged into a predetermined die to be pressed, thereby obtaining an inorganic fiber molded body. At the time of pressing of the mixture, heat may be applied to the mixture according to need.
The inorganic fiber molded body normally has a plate shape, but the shape thereof is not limited to the plate shape and may be a shape in which a number of plate shaped members are perpendicularly superposed on one another.

The pressure for pressing is desirably in the range of 0.98 to 9.8 MPa. When the pressing pressure is less than 0.98 MPa, the obtained inorganic fiber molded body cannot maintain its strength and is hence destroyed, whereas when the pressing pressure exceeds 9.8 MPa, excess compression causes deteriorated processability and also, the bulk density becomes so high that solid heat transfer is increased, bringing about deteriorated heat insulation property.
Also, the heating temperature during pressing is desirably in the range of 400 to 700□C. When the heating temperature is in this range, sufficient heat insulation property can be maintained while retaining a proper processability.

### (b) In case of using an inorganic fiber molded body obtained by a wet molding method

Next, in a wet molding method, the inorganic fiber and, according to the need, the inorganic powder and the inorganic binder are mixed and stirred in water to fully disperse these components. Then, an aqueous aluminum sulfate solution and the like is added as a flocculant to the mixture, to obtain a primary aggregate made of the inorganic fiber with the inorganic powder and inorganic binder adhered along its surface. Next, according to need, an emulsion or the like of the organic elastic material is added in the water in an amount falling in a predetermined range and then, a cationic polymer flocculant is added to the mixture to obtain a slurry (suspension liquid) containing a aggregate.

Next, the slurry (suspension liquid) containing the aggregate is formed into a sheet by using a mesh-like member (mesh), a so-called sheet-forming process is carried out, to obtain a sheet-formed body having a plate shape. After the sheet-forming process, the entire sheet-formed body may be pressed to raise the density of the sheet-formed body. Then, the obtained sheet-formed body is dried to obtain an inorganic fiber molded body.

Next, a powder which serves as raw material of the inorganic coating layer, such as a glass powder which is prepared by pulverizing the glass having the composition as described above, is dispersed in water, and subsequently a powder of at least one crystalline material selected from the group consisting of carbide crystals, nitride crystals, oxide crystals, and carbon crystals is added thereto and dispersed to prepare an inorganic coating layer forming slurry.

By dipping (immersing) the inorganic fiber molded body into the inorganic coating layer forming slurry thus prepared, a slurry powder layer is formed on a portion of the surface of the inorganic fiber molded body. Here, by dipping in a portion of or all the surface of the inorganic fiber molded body, the slurry powder layer can be formed at any surface. In order to adjust the thickness of the slurry powder layer, the dipping time and the number of rounds of dipping into the slurry can be adjusted.

As for methods other than dipping, a method of carrying out curtain coating to form the slurry powder layer, a method of carrying out spray coating and the like can be proposed.

When applying the curtain coating method, on the inorganic fiber molded body which is translated at a constant speed, the inorganic coating layer forming slurry is dropped through a slit having a predetermined width in a curtain-like form (film-like form) to form the slurry powder layer. In order to adjust the thickness of the slurry powder layer, the translation speed of the inorganic fiber molded body may be adjusted or the dropping speed of the slurry may be adjusted.

Further, in the spray coating, the inorganic coating layer forming slurry is sprayed onto the surface of the inorganic fiber molded body by using sprays having a predetermined shape, such as a spray nozzle, to form the slurry powder layer. In order to adjust the thickness of the slurry powder layer, the diameter and spraying amount of the slurry droplet, the translation speed of the spray and the like may be adjusted.

Then, the slurry powder layer which is formed on the surface of the inorganic fiber molded body is dried, and heated at a predetermined temperature so that the crystalline material is formed into foams and the amorphous material is melted in addition, to form the inorganic coating layer.
Generally, the upper limit value of the heating temperature of the glass material is desirably 1400□C, more desirably 1300□C, whereas the lower limit value is desirably 1000□C, and more desirably 1100□C. The heating temperature within the above-mentioned range allows efficient forming of an inorganic coating layer having desired physical properties. Normally, the layer in a melting state which is to become an inorganic coating layer merely penetrates into the inorganic fiber molded body; thus, an inorganic coating layer having a certain degree of adhesion strength to the inorganic fiber molded body and hardly contains inorganic fibers therein is formed.

In order to adjust the diameter of the foams, the average particle diameter of the crystalline material used as raw material may be adjusted, or the heating temperature and heating time upon forming foams may be adjusted.

### EXAMPLES

The present invention will be explained in more detail by way of examples, which are not intended to be limiting of the present invention.

### (Example 1)

(1) A so-called shot-reduced bulk material (trade name: IBI-Wool, manufactured by Ibiden Co., Ltd.) (97 parts by weight) prepared by removing coarse particles from silica-alumina based ceramic fiber as inorganic fiber constituting an inorganic fiber molded body was added in a necessary amount of water to loosen the fibers. Then, 3 parts by weight of colloidal silica (trade name: SNOWTEX, manufactured by Nissan Chemical Industries Ltd.) was further added as an inorganic binder to the mixture, which was then thoroughly stirred and mixed. An aqueous aluminum sulfate was further added as a flocculant to the mixture to obtain a primary aggregate. Then, a cationic polymer flocculant was added to the mixture to once again flocculate the primary aggregate so that a slurry was prepared.

(2) Next, the slurry was formed into a sheet by a mesh (mesh-like member) while being sufficiently stirred and the obtained laminated body was lightly pressed and then dried at 135□C to obtain a plate-shaped inorganic fiber molded body having a thickness of 20 mm and which was 600 mm long □ 900 mm in width.

(3) Then, a glass containing 8.6% by weight of B₂O₃, 1.2% by weight of Na₂O, 0.6% by weight of MgO, 10.2% by weight of Al₂O₃, 63.7% by weight of SiO₂, 4.8% by weight of K₂O, 8.8% by weight of CaO, and 2.1% by weight of other unavoidable impurities was pulverized to glass powder having an average particle diameter of 10 µm, and 100 parts by weight of this glass powder was dispersed in a necessary amount of water. Subsequently, 30 parts by weight of SiC powder (manufactured by Shinano Electric Refining Co., Ltd.) having an average particle diameter of 13 µm was added to the mixture and thoroughly mixed so that a suspension was obtained.

(4) Next, the position of the main surface of the inorganic fiber molded body was determined above the suspension liquid such that the main surface was faced parallel to the surface of the suspension liquid, and in that state the inorganic fiber molded body was gradually made to descend to a degree in which one main surface contacts completely with the suspension liquid. Then, the one main surface was immersed in the suspension liquid and pulled out thereafter so that a layer of glass powder containing SiC powder was formed on the one surface of the inorganic fiber molded body.

(5) Then, the inorganic fiber molded body on which the layer of glass powder was formed was charged into a furnace in ambient atmosphere or an atmosphere containing oxygen, and then gradually heated at a maximum temperature of 1250□C for 20 minutes to form an inorganic coating layer (hereinafter also referred to as foam glass layer) on the surface of the inorganic fiber molded body. The inorganic coating layer was gray in color.
The composition and average particle diameter of the glass powder and SiC powder together with the weight and thickness of the formed foam glass layer were as shown in Table 1.

### (Example 2)

The same processes as in Example 1 were conducted with respect to processes (1) and (2).
Process (3) was carried out as in Example 1 except that the average particle diameter of the SiC powder, and the ratios of the glass powder and SiC powder were set to the values shown in Table 1.
Next, as process (4), a layer of the glass powder containing SiC powder was formed using the curtain coating method. That is, the suspension liquid of the glass powder prepared in process (3) and which contains SiC powder, was dropped through a slit in a curtain-like form and the inorganic fiber molded body in a horizontal state was passed through the dropped liquid to form a layer of the glass powder containing SiC powder on the one main surface of the inorganic fiber molded body.
Thereafter, an inorganic coating layer (foam glass layer) was formed on the surface of the inorganic fiber molded body as in process (5) of Example 1.

### (Example 3)

The same processes as in Example 1 were conducted with respect to processes (1) and (2).
Process (3) was carried out as in Example 1 except that carbon powder was used instead of SiC powder, and the average particle diameter of the carbon powder, and the ratios of the glass powder and carbon powder were set to the values shown in Table 1.
Next, as process (4), a layer of the glass powder containing carbon powder was formed using the curtain coating method. That is, the suspension liquid of the glass powder prepared in process (3) and which contains carbon powder, was dropped through a slit in a curtain-like form and the inorganic fiber molded body in a horizontal state was passed through the dropped liquid to form a layer of the glass powder containing carbon powder on the one main surface of the inorganic fiber molded body.
Thereafter, an inorganic coating layer (foam glass layer) was formed on the surface of the inorganic fiber molded body as in process (5) of Example 1.

### (Example 4)

The same processes as in Example 1 were conducted with respect to processes (1) and (2).
Process (3) was carried out as in Example 1 except that the average particle diameter of the SiC powder, and the ratios of the glass powder and SiC powder were set to the values shown in Table 1.
Next, as process (4), a layer of the glass powder containing SiC powder was formed using a spraying method.
That is, the suspension liquid of the glass powder prepared in process (3) and which contains SiC powder, was sprayed from a flat-type spray nozzle to evenly adhere the glass powder containing SiC powder to the one main surface of the inorganic fiber molded body so that a layer of the glass powder containing SiC powder was formed.
Thereafter, an inorganic coating layer (foam glass layer) was formed on the surface of the inorganic fiber molded body as in process (5) of Example 1.

### (Example 5)

(1) A so-called shot-reduced bulk material (trade name: IBI-Wool, manufactured by Ibiden Co., Ltd.) (24 parts by weight) prepared by removing coarse particles from silica-alumina based ceramic fiber as inorganic fiber constituting an inorganic fiber molded body was added in a necessary amount of water to loosen the fibers.

Next, 24 parts by weight of a TiO₂ powder (trade name: HT0100, manufactured by Toho Titanium Co. , Ltd.) and 49 parts by weight of a SiO₂ powder (trade name: AEROSIL 90, manufactured by NIPPON AEROSIL CO., LTD.) were added as an inorganic powder of the inorganic fiber molded body to the mixture, which was then sufficiently mixed. Then, 3 parts by weight of colloidal silica (trade name: SNOWTEX, manufactured by Nissan Chemical Industries Ltd.) was further added as an inorganic binder to the mixture, which was then thoroughly stirred and mixed. An aqueous aluminum sulfate was further added as a flocculant to the mixture, to obtain a primary aggregate. Then, a cationic polymer flocculant was added to the mixture to once again flocculate the primary aggregate so that a slurry was prepared.

Processes (2) to (5) were carried out as in Example 2 except that the average particle diameter of the SiC powder, and the ratios of the glass powder and SiC powder were set to the values shown in Table 1; and thus an inorganic coating layer (foam glass layer) was formed on the surface of the inorganic fiber molded body.

### (Example 6)

The same processes as Example 5 were carried out except that processes (2) to (5) were carried out using carbon powder instead of SiC powder, and the average particle diameter of the carbon powder, and the ratios of the glass powder and carbon powder were set to the values shown in Table 1; thus, an inorganic coating layer (foam glass layer) was formed on the surface of the inorganic fiber molded body.

### (Examples 7 and 8)

The same processes (1) to (5) as in Example 1 were carried out to form an inorganic coating layer (foam glass layer) on the surface of the inorganic fiber molded body except that 97 parts by weight of inorganic fiber formed of 75% by weight of silica and 25% by weight of magnesium oxide and having an average fiber diameter of 3 µm and an average fiber length of 30 µm was used to prepare the slurry, instead of the shot-reduced bulk material (tradename: IBI-Wool, manufactured by Ibiden Co., Ltd.), and the ratios of the glass powder and SiC powder were set to the values shown in Table 1.
Here, the inorganic fiber formed of 75% by weight of silica and 25% by weight of magnesium oxide showed as a whole a solubility of 410 ppm to saline solution.

### (Examples 9 and 10)

The same processes (1) to (5) as in Example 1 were carried out to form an inorganic coating layer (foam glass layer) on the surface of the inorganic fiber molded body except that 97 parts by weight of alumina fiber having an average fiber diameter of 3 µm and an average fiber length of 30 µm was used to prepare the slurry, instead of the shot-reduced bulk material (trade name: IBI-Wool, manufactured by Ibiden Co. , Ltd.), and the ratios of the glass powder and SiC powder were set to the values shown in Table 1.

### (Comparative Example 1)

The same processes as Example 2 were carried out to form an inorganic coating layer (foam glass layer) on the surface of the inorganic fiber molded body except that the ratios of the glass powder and SiC powder were set to the values shown in Table 1, and as process (5), the inorganic fiber molded body on which the layer of glass powder was formed was charged into a furnace in nitrogen atmosphere and then gradually heated at a maximum temperature of 1250□C for one hour to form an inorganic coating layer (foam glass layer) on the surface of the inorganic fiber molded body.

### (Comparative Example 2)

The same processes as Example 5 were carried out to form an inorganic coating layer (foam glass layer) on the surface of the inorganic fiber molded body except that the ratios of the glass powder and SiC powder were set to the values shown in Table 1, and as process (5), the inorganic fiber molded body on which the layer of glass powder was formed was charged into a furnace in nitrogen atmosphere and then gradually heated at a maximum temperature of 1250□C for 40 minutes to form an inorganic coating layer (foam glass layer) on the surface of the inorganic fiber molded body.

### (Comparative Example 3)

The same processes as in Comparative Example 1 were carried out to form an inorganic coating layer (foam glass layer) on the surface of the inorganic fiber molded body, except that the ratios of the glass powder and SiC powder were set to the values shown in Table 1.

### (Comparative Example 4)

The same processes as in Comparative Example 2 were carried out to form an inorganic coating layer (foam glass layer) on the surface of the inorganic fiber molded body, except that the ratios of the glass powder and SiC powder were set to the values shown in Table 1.

### (Comparative Example 5)

The same processes as in Comparative Example 1 were carried out to form an inorganic coating layer (foam glass layer) on the surface of the inorganic fiber molded body, except that the SiC powder was not added to the glass powder.

### [Evaluation of physical property]

The inorganic fiber articles obtained in the respective Examples and Comparative Examples were measured through the following methods with respect to their physical properties and characteristics.
(1) Measurement of thickness of foam glass layer together with diameter of maximum pore (foam) and average pore (foam) diameter in foam glass layer
The obtained inorganic fiber article was cut to measure the thickness of the foam glass layer together with the diameter of the maximum pore and the average pore diameter using a scanning electron microscope (SEM) and factory microscope. The results were as shown in Tables 1, 2-1 and 2-2.
(2) Materials contained in foam glass layer
An X-ray diffractometer (RAD-B) manufactured by Rigaku Corporation was used to analyze the materials contained in the foam glass layer constituting the obtained inorganic fiber article.

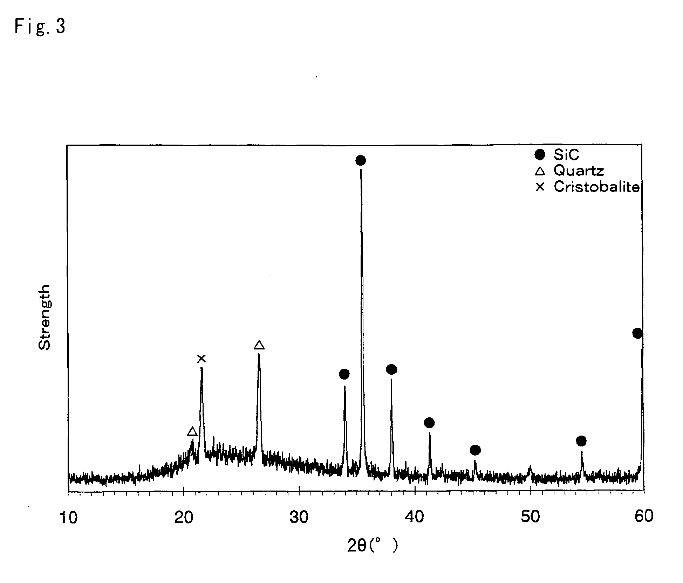

Fig. 3 shows a chart indicating the results of X-ray diffraction of the inorganic fiber articles in the Examples. Moreover, the materials observed through the analysis were as shown in Tables 2-1 and 2-2.
(3) Particle generating property
The particle generating property was measured in accordance with JIS B9926, i.e., clean air at the speed of 10 L/min was blown to the foam glass layer of the inorganic fiber article in a booth at class 100 and the cleanness was measured using a particle counter.
The particle counter used here was an Airborne Particle Counter (KR-12A <HHPC-6>) manufactured by RION Co., Ltd., and the number of particles having 0.5 µm or more upon sucking the air for 10 minutes was measured by use thereof. The number of particles in a blank of the booth at class 100 was 90 particles. The results are as shown in Tables 2-1 and 2-2.

### (4) Water permeability

The weight of the firstly obtained inorganic fiber article was measured and applied to heating treatment. Then, 10g of water was applied to the surface of the foam glass layer and exposed for 10 minutes. Thereafter, the water was wiped off from the surface and the increased weight (g) of the inorganic fiber article with respect to its initial weight was calculated.
Thus, the water permeability (%) was obtained by dividing the increased weight by 10g. The results are as shown in Tables 2-1 and 2-2.

### (5) Measurement of heat cycle characteristics

A heat cycle of charging the obtained inorganic fiber article into an electric furnace, raising the temperature from room temperature to 800□C in 10 minutes, holding the temperature at 800□C for 3 hours, and cooling down the temperature to room temperature in the electric furnace, was repeated for 5 cycles, and then the inorganic fiber article was observed for whether cracks were generated or not. The results are as shown in Tables 2-1 and 2-2.

### (6) Measurement of thermal conductivity

The thermal conductivity at room temperature was measured through a hot wire method, using a Quick Thermal Conductivity Meter QTM-500 (manufactured by Kyoto Electronics Manufacturing Co., Ltd.). The results are as shown in Tables 2-1 and 2-2.

### (7) Measurement of coefficient of thermal expansion

The obtained inorganic fiber article was cut into a predetermined length and after the dimension thereof at room temperature was measured, the cut inorganic fiber article was heated to 800□C and the dimension thereof was measured again to obtain the coefficient of thermal expansion.

**Table 1**

| | Glass powder | | SiC powder | | Foam glass layer after heating treatment | |
|---|---|---|---|---|---|---|
| | (Part by weight) | (Average particle diameter) | (Part by weight) | (Average particle diameter) | Weight (g) | Thickness (mm) |
| Example 1 | 100 | 10 | 30 | 13 | 25 | 3 |
| Example 2 | 100 | 15 | 20 | 10 | 20 | 2.3 |
| Example 3 | 100 | 20 | (*)10 | 13 | 20 | 2 |
| Example 4 | 100 | 10 | 30 | 20 | 52 | 4.8 |
| Example 5 | 100 | 10 | 25 | 13 | 25 | 3 |
| Example 6 | 100 | 10 | (*)10 | 10 | 20 | 2.4 |
| Example 7 | 100 | 15 | 30 | 13 | 25 | 1.9 |
| Example 8 | 100 | 10 | 20 | 10 | 22 | 2.2 |
| Example 9 | 100 | 10 | 30 | 16 | 26 | 3.5 |
| Example 10 | 100 | 10 | 20 | 10 | 10 | 1.2 |
| Comparative Example 1 | 100 | 10 | 50 | 13 | 35 | 3.5 |
| Comparative Example 2 | 100 | 10 | 50 | 13 | 34 | 3.2 |
| Comparative Example 3 | 100 | 10 | 5 | 13 | 10 | 0.6 |
| Comparative Example 4 | 100 | 10 | 2 | 13 | 10 | 0.5 |
| Comparative Example 5 | 100 | 10 | 0 | - | 15 | 0.8 |

| | | | | | | |
|---|---|---|---|---|---|---|
| *Examples 3 and 6 use carbon powder instead of SiC powder. | | | | | | |

**Table 2-1**

| | Foam glass layer after heating treatment | | | Thermal conductivity (W/mK) | Coefficient of thermal expansion (ppm/□C), | Particle generating property (particles/10 min) | Water permeability (%) | Heat cycle characteristic |
|---|---|---|---|---|---|---|---|---|
| | Average Particle Diameter (µm) | Maximum particle diameter (µm) | Contained material | | | | | |
| Example 1 | 500 | 1200 | SiC, SiO₂ (quartz, cristobalite), glass | 0.22 | 4.6 | 110 | 0.1 | No cracks |
| Example 2 | 480 | 1100 | SiC, SiO₂ (quartz, cristobalite), glass | 0.2 | 4.5 | 105 | 0.1 | No cracks |
| Example 3 | 700 | 1500 | Carbon, glass | 0.2 | 4.5 | 120 | 0.1 | No cracks |
| Example 4 | 500 | 1200 | SiC, SiO₂ (quartz, cristobalite), glass | 0.2 | 4.3 | 100 | 0.3 | No cracks |
| Example 5 | 510 | 1100 | SiC, SiO₂ (quartz, cristobalite), glass | 0.1 | 4.7 | 105 | 0.1 | No cracks |
| Example 6 | 450 | 1250 | carbon, glass | 0.1 | 4.7 | 120 | 0.1 | No cracks |
| Example 7 | 550 | 1350 | SiC, SiO₂ (quartz, cristobalite), glass | 0.25 | 5 | 115 | 0.1 | No cracks |
| Example 8 | 410 | 1050 | SiC, SiO₂ (quartz, cristobalite), glass | 0.25 | 5 | 100 | 0.1 | No cracks |
| Example 9 | 600 | 1550 | SiC, SiO₂ (quartz, cristobalite), glass | 0.15 | 5.5 | 125 | 0.2 | No cracks |
| Example 10 | 350 | 900 | SiC, SiO₂ (quartz, cristobalite), glass | 0.15 | 5.5 | 105 | 0.1 | No cracks |

**Table 2-2**

| | Foam glass layer after heating treatment | | | Thermal conductivity (W/mK) | Coefficient of thermal expansion (ppm/□C) | Particle generating property (particles/10 min) | Water permeability (%) | Heat cycle characteristic |
|---|---|---|---|---|---|---|---|---|
| | Average Particle Diameter (µm) | Maximum particle diameter (µm) | Contained material | | | | | |
| Comparative Example 1 | 800 | 3400 | SiC, SiO₂ (quartz, crlstoballte), glass | 0.3 | 4.8 | 350 | 5 | No cracks |
| Comparative Example 2 | 900 | 2900 | SiC, SiO₂ (quartz, cristobalite), glass | 0.15 | 4.8 | 470 | 10 | No cracks |
| Comparative Example 3 | 350 | 450 | SiC, SiO₂ (quartz, cristobalite), glass | 0.2 | 3.6 | 150 | 3 | Cracks generated |
| Comparative Example 4 | 300 | 380 | SiO₂ (quartz, cristobalite), glass | 0.2 | 3.5 | 280 | 5 | Cracks generated |
| Comparative Example 5 | 5 | 10 | Glass | 0.2 | 3.5 | 520 | 6 | Cracks generated |

As shown in Tables 1, 2-1 and 2-2, the inorganic fiber articles obtained in the Examples were superior in insulating ability, did not generate particles, did not allow water to pass through, and had resistance to thermal shock.
In contrast, the inorganic fiber articles manufactured in the Comparative Examples readily generated particles and easily allowed water to pass through when open pores were formed. Moreover, as in the Comparative Example 5 when the foam glass layer did not contain crystalline materials, foams were hardly observed and thus cracks were readily generated.

### BRIEF DESCRIPTION OF THE DRAWINGS

Fig. 1 is a cross-sectional view that schematically shows a portion of a cross-section obtained by cutting an inorganic fiber article of the present invention in the perpendicular direction to the exposed surface.
Fig. 2 is a cross-sectional view that schematically shows a portion of a cross-section obtained by cutting a conventional inorganic fiber article in the perpendicular direction to the exposed surface.
Fig. 3 is a chart indicating the results of X-ray diffraction of composition of a foam glass layer constituting the inorganic fiber article.

### EXPLANATION OF SYMBOLS

1 Inorganic fiber article
2 Inorganic coating layer
3 Inorganic fiber molded body
4 Foam
5 Inorganic fiber
6 Inorganic powder
11 Heat resistant material
12 Glass layer
13 Base member
14 Inorganic fiber based material
15 Inorganic particle
16 Glass

## Claims

1. An inorganic fiber article comprising
an inorganic coating layer having foams, said inorganic coating layer formed on at least a portion of the surface of an inorganic fiber molded body.

2. The inorganic fiber article according to claim 1,
wherein
said inorganic coating layer is formed on the entire surface of one of the faces constituting the outer shape of said inorganic fiber molded body.

3. The inorganic fiber article according to claim 1 or 2,
wherein
said inorganic coating layer mainly comprises an amorphous material.

4. The inorganic fiber article according to claim 3,
wherein
said amorphous material is at least one amorphous material selected from the group consisting of glass, a diamond like carbon, a silicone oxide film, a hafnium oxide film, a chalcogenide based multi-element alloy, and an opaline material.

5. The inorganic fiber article according to any of claims 1 to 4,
wherein
said inorganic coating layer contains at least one crystalline material selected from the group consisting of carbide crystals, nitride crystals, oxide crystals, and carbon crystals.

6. The inorganic fiber article according to any of claims 1 to 5,
wherein
at least a portion of said foams are closed pores.

7. The inorganic fiber article according to any of claims 1 to 6,
wherein
a water permeability from the outwardly-exposed surface side to the inorganic fiber molded body side of said inorganic coating layer is 1% or less.

8. The inorganic fiber article according to any of claims 1 to 7,
wherein
the diameter of each of said foams is 90% or less with respect to the thickness of said inorganic coating layer.

9. The inorganic fiber article according to any of claims 1 to 8,
wherein
said inorganic coating layer contains 30% by weight or more of silica, and has a coefficient of thermal expansion of 6 ppm or less.
